# EUROPEAN PATENT SPECIFICATION

(11) **EP 2 405 629 B1**
(45) Date of publication and mention of the grant of the patent: **07.09.2016**
(21) Application number: 10168594.9
(22) Date of filing: 06.07.2010
(51) Int. Cl.: H04L 29/08, H04W 8/12

(54) **Method and apparatuses for controlling access to services of a telecommunications system**
Verfahren und Vorrichtungen zum Steuern des Zugangs zu Diensten eines Telekommunikationssystems
Procédé et appareils pour contrôler l'accès à des services d'un système de télécommunication

(43) Date of publication of application: 11.01.2012
(73) Proprietor: Telefonaktiebolaget LM Ericsson (publ), 164 83 Stockholm (SE)
(72) Inventor: Almaraz Valdes, Luis Miguel, 28044 Madrid (ES); Montejo Ayala, Marta, 28901 Getafe Madrid (ES); Cordoba Plaza, Enrique, 28008 Madrid (ES)
(74) Representative: Elzaburu Marquez, Alberto

(56) References cited:
- US-A1- 2007 021 118
- DUTNALL S ET AL: "Critical issues for roaming in 3G", IEEE WIRELESS COMMUNICATIONS, IEEE SERVICE CENTER, PISCATAWAY, NJ, US, vol. 10, no. 1, 1 February 2003 (2003-02-01), pages 29-35, XP011095588, ISSN: 1536-1284, DOI: DOI:10.1109/MWC.2003.1182108

## Description

### FIELD OF THE INVENTION

The present invention relates to method and apparatuses for controlling access to services of a telecommunications system based upon location information of a user terminal.

### BACKGROUND

Modern telecommunications systems are arranged to provide a plurality of services (e.g. voice based services, data based services, combined voice/video based services, etc) to their users via a plurality of different access networks to which these users can attach (i.e. connect) via their user terminals, UEs. Technical specifications for devising many of these systems are being published by the 3rd. Generation Partnership Project, 3GPP.

One example of such a kind of systems is a telecommunications system comprising an Internet Protocol (IP) Multimedia Subsystem, also known as IMS. The IMS is envisaged to be a part of a telecommunications system which is able to provide a plurality of services to UEs attached to different kind of access networks. These services can comprise: basic voice services, multimedia communication services (e.g. comprising voice and image transmission), push-to-talk services (i.e. a kind of "walkie-talkie" service allowing a UE to send a voice message to one or more UEs), etc.

An advantage of the IMS is that their functional entities (nodes) become a -say- common core for providing services to UEs, which can be accessing to the IMS through different kind of access networks, and using state-of-the art flexible communication protocols, such as: the Session Initiation Protocol, SIP, which used for controlling the communications to/from the UEs, or the DIAMETER protocol, which is used to communicate between server entities of the IMS for controlling access to the IMS services by the UEs.

In short, in a telecommunications network comprising an IMS, the access to services by UEs can be controlled with the intervention of, among other: home subscriber server nodes (HSS), which store UEs subscription and location related data, and application servers (AS). The ASs can intervene in the signaling of some services and implement high layer aspect related logic for accomplishing with these services and for adapting them according to data received in the service signaling and/or data related to the concerned UEs, some of which can be obtained from one or more subscriber server nodes (HSSs).

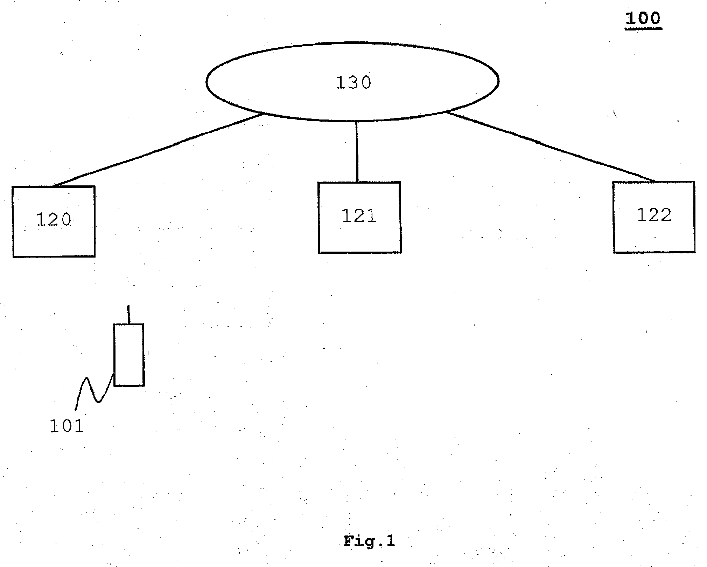

The Fig. 1 illustrates schematically a telecommunications system 100 comprising a IMS subsystem 130 and a plurality of access networks (120, 121, 122) to which a UE 101 can attach so as to access to the services provided via the IMS 130. For example, access networks 120 and 122 can include a GSM/GPRS access network comprising: radio access nodes (of the same or different radio technologies), Mobile Switching Centers, MSCs, Visitor Location Register, VLRs, Serving GPRS Support Nodes, SGSNs, and Gateway GPRS Support Nodes, GGSNs. Also, access network 121 can e.g. comprise a Local Access Network, LAN, a Wireless LAN, WLAN, or any other wired or wireless based access network, as well as the corresponding access gateway nodes allowing connection to the IMS.

The patent application US2007/0021118 (referred herein as D1) discloses also telecommunications systems that can comprise different access networks and a IMS subsystem. In particular, D1 discloses an alternative manner of routing incoming services (e.g. calls, SMSs, etc) to a roaming cellular terminal (UE) by assigning it a "fixed line number" (i.e. a number of a fixed line network, such as a Public Switched Telephone Network, PSTN) as an "alias" used for universally addressing any communication to the UE wherever it is roaming. Some of the embodiments described by D1 (e.g. D1: embodiments with reference to figures 5 and 6) comprise the intervention of specific nodes of a IMS subsystem for managing communications towards a roaming UE.

Some illustrating cases with regard to different access networks that can be used by a UE for accessing to an IMS are cited below.

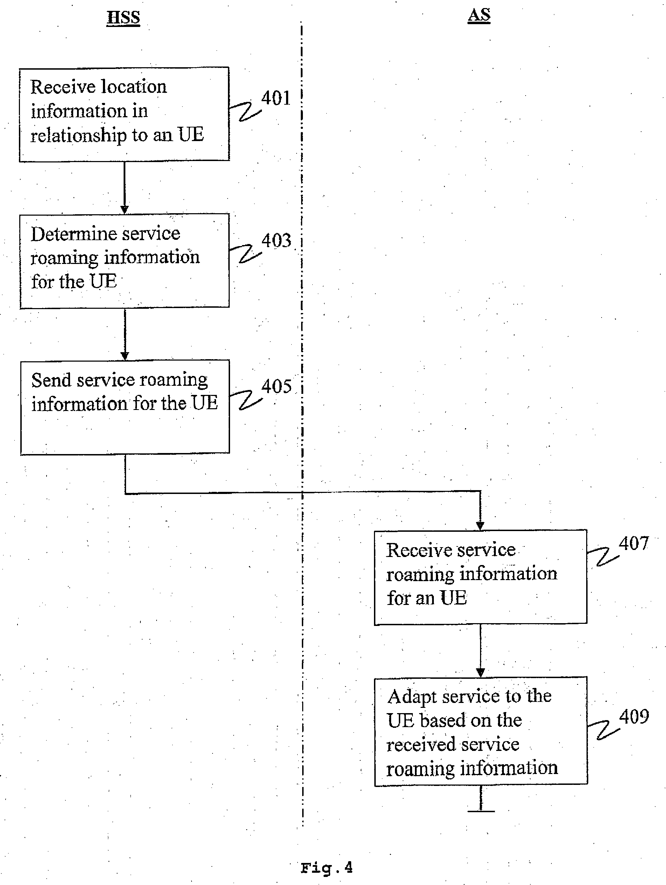

The 3GPP specification TS 23.401 (V9.5.0; June-2010; http://www.3gpp.org/ftp/Specs/archive/23_series/23.401/2340 1-950.zip) specifies in "Figure 4.2.2-1" a system architecture for accessing to an IMS comprising nodes of an access network compliant with Evolved Universal Terrestrial Radio Access Network (E-UTRAN). The 3GPP specification TS 23.402 (V9.5.0; June-2010;
http://www.3gpp.org/ftp/Specs/archive/23_series/23.402/2340 2-950.zip) specifies in "Figure 4.2.3-1" a system architecture for accessing to an IMS comprising nodes of an access networks not standardized by 3GPP (i.e. the so called "non-3GPP access networks, such as WiMAX or WLAN).

In summary, the access networks (120, 121, 122) to which an UE can attach so as to get services provided by the telecommunications system 100, as controlled by IMS 130, can vary and comprise, among other, an "Evolved Packet System", EPS comprising the so called- 3GPP radio accesses (GERAN/UTRAN/E-UTRAN), as well as the -so called- non-3GPP radio accesses (e.g. WiMAX, WLAN), as cited in the examples above. Also these access networks (120, 121, 122) can comprise not only packet-switch PS based networks (such as a 2nd. generation GPRS network, or an EPS network, providing PS bearer access services), but also circuit-switch CS based networks (such as a GSM network comprising MSCs/VLRs providing CS bearer access services). In particular, the IMS is envisaged to provide its services to UEs attached to any access network that can connect to IMS servers (in particular, to a Call Session Control Function, CSCF, with the functionality of Proxy, P-CSCF) via the necessary (media and protocol) gateways when necessary.

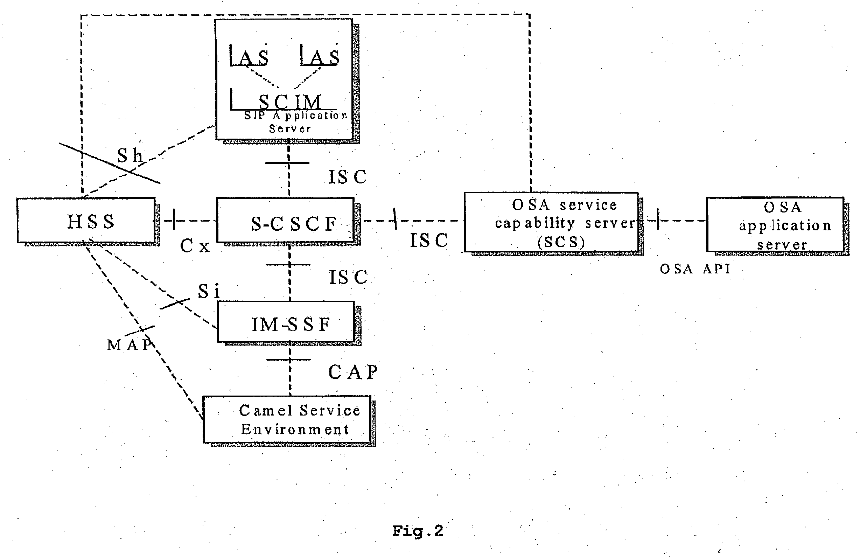

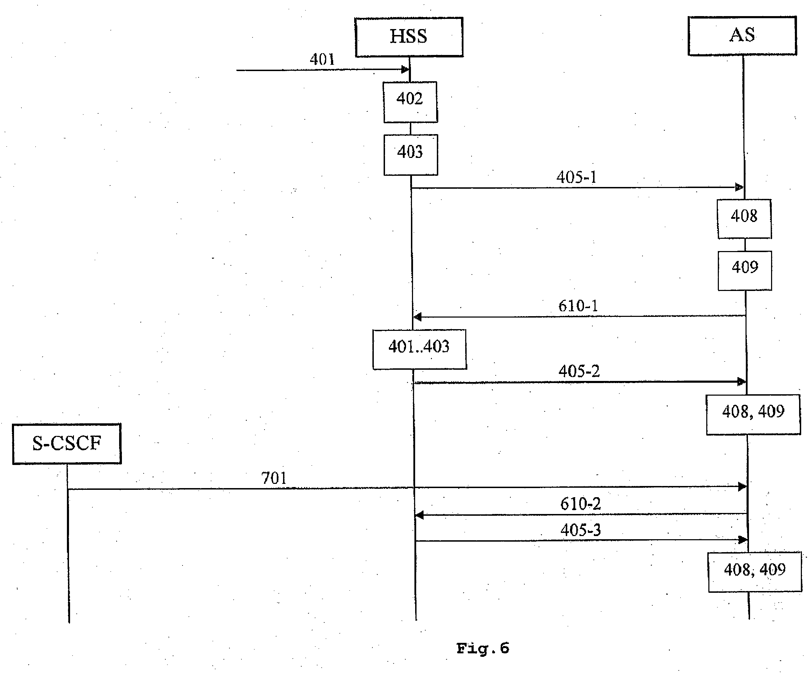

The Fig.2 illustrates schematically details of an IMS and, in particular, some servers of an IMS architecture and their interfaces. Fig.2 is a copy of "Figure 6a" of 3GPP specification TS 23.002 (V9.3.0; June-2010; http://www.3gpp.org/ftp/Specs/archive/23_series/23.002/2300 2-930.zip). A more detailed illustration of servers in an IMS architecture is provided by said 3GPP specification in e.g. "Figure 6".

In particular, Fig.2 illustrates interfaces between servers implementing service logic for adapting the provision of services to the UEs, usually known as application servers, ASs, and some other core entities of the IMS (e.g. S-CSCFs, HSSs). Examples of ASs are the illustrated SIP-Application Servers, SIP-AS, or the OSA Service Capability Servers. The illustrated Home Subscriber Server, HSS, is not necessarily related to IMS only, but it is envisaged as the subscriber server in a telecommunications system (e.g. as described in TS 23.002, and even considering servicing as a subscriber server the different access networks described by e.g. TS 23.401 or TS 23.402), and it is arranged for being the master storage database storing subscription information of a plurality of UEs subscribed to a network operator of a telecommunications system, and also for storing location information about these UEs (i.e. as received from nodes of the access network/s to which these UEs attach).

As will be apparent for the skilled person, a telecommunications system (100) can comprise network domains of a plurality of network operators; wherein a network operator owns one or more access networks (120, 121, 122), and wherein there can be one or more IMS subsystems (130) owned by one or more operators and comprising a plurality of nodes as the ones illustrated by Fig.2.

It is to be noticed that a telecommunications system can comprise a subscriber server (HSS) adapted to be the master storage for subscription data and location data of a plurality of users, and a plurality of servers (ASs) adapted to control the adaptation of services to the concerned UEs, and does not need to comprise an IMS as specified by the cited 3GPP specifications. However, in view of the known prior-art disclosed by 3GPP with regard to IMS, it can be envisaged that telecommunications systems implementing similar kind of architectural solutions will also envisage similar kind of solutions as the ones disclosed therein.

In particular, and with reference to Fig.2, the currently solutions standardized by 3GPP allow an AS to receive, process internally, and send SIP signaling messages to/from an UE through the "ISC" interface, which allows the AS to exchange signaling with a Serving Call Session Control Function, S-CSCF, that routes SIP signaling to/from UEs, and to obtain also some data therefrom. Also, with reference to Fig. 2, the currently solutions standardized by 3GPP allows an AS to communicate with the subscriber server, HSS, via the "Sh" interface to, among other, obtain also data related to a certain UE for which a service can be held by the AS.

Accordingly, an AS can control the access to a service for a UE (e.g. for which it receives signaling via the "ISC" interface) and, subsequently, adapt it, based on information it obtains relating to said UE from the HSS (e.g. via "Sh" interface).

The "Sh" interface between a HSS and an (SIP) AS, comprising messages and contents, is defined by 3GPP specification TS 29.328 V9.2.0; June-2010; http://www.3gpp.org/ftp/Specs/archive/29_series/29.323/2932 8-920.zip), and details relating to the coding of these message and contents according to the DIAMETER protocol.are defined by 3GPP specification TS 29.329 V9.2.0; June-2010; http://www.3gpp.org/ftp/Specs/archive/29_series/29.329/2932 9-920.zip).

An example of an AS intervention for adapting a service to a UE accessing via a certain access network to the IMS could be as follow:
- The AS obtains from the HSS relevant data related to the UE, such as subscriber data, location data, etc.
- Then, the AS receives from a S-CSCF of the IMS, a message indicating a terminating service to the UE, such as a SIP message INVITE addressing said UE and intended to establish a communication session to it.
   .- The AS then, using the data it has with regard to the concerned UE (previously got from the HSS, or obtained upon request in that moment), can, for example: [A] route the session request towards its original destination (i.e. send a SIP message INVITE to the corresponding S-CSCF of the IMS so that it gets further routed towards its destination), [B] divert the session request by forwarding a modified SIP message INVITE to another UE or to another server (e.g. the destination of the original SIP message INVITE is changed to address a voice message recording server, or to address to different UE as the originally indicated), [C] send a SIP negative reply neglecting the terminating service, etc.

A factor that can condition how an AS adapts a service to a UE is the location of said UE obtained from the HSS, as it provides details about the access network to which said UE is currently connected, as will be later mentioned.

For example, in the illustrating case above, sending a SIP negative reply neglecting the terminating service ([C]) can be a result of the detailed location information of said UE indicating e.g. an identifier of a node/area/geographical information/etc which is determined by the AS as belonging to a country which is outside the network domain owned by the network operator to which the UE is subscribed (home operator), wherein incoming calls/sessions terminating in the UE are not allowed (as illustrated in the example), or wherein outgoing calls/sessions originated by the UE are not allowed (in the case wherein the AS receives SIP message INVITE originated from said UE). Similarly, actions [A] or [B] can also be conditioned, totally or in part, by details of location information related to said UE. For example, action [A] can be taken by default for said UE when its detailed location information indicate an identifier of a node or a location area identifier which is determined by the AS as belonging to the UE's (home) operator; whilst action [B], which implies the execution of a second service for the UE (usually known as call forwarding), is executed upon the same conditions as in [A] but at certain time of the day.

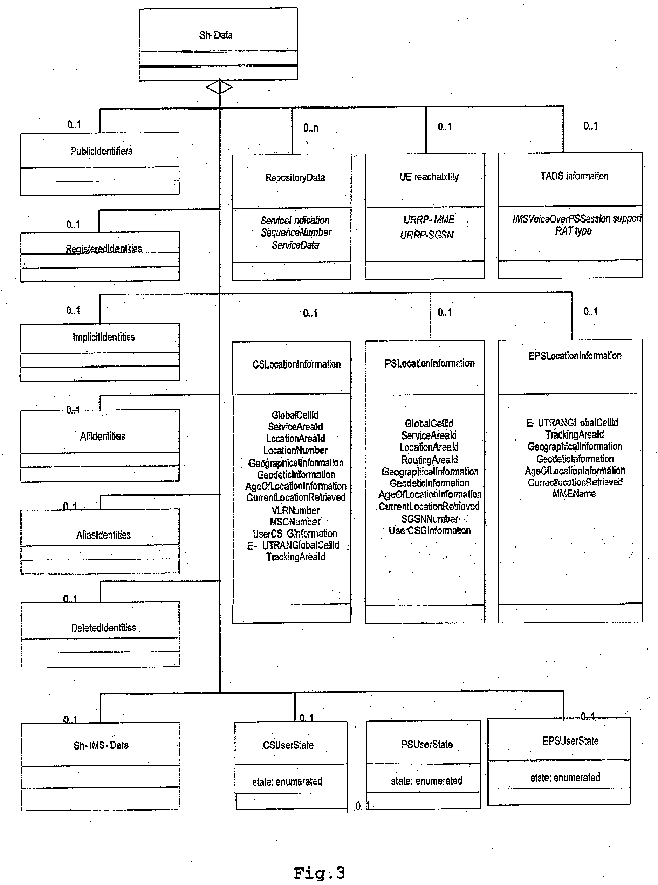

The Fig.3 is taken from the aforementioned 3GPP specification 29.328 and illustrates schematically the data that can be exchanged between a HSS and an AS through the "Sh" interface. In particular, it can be seen that the location information related to a UE can comprise zero or one instance of:
- Location information data relating to an access network providing circuit-switched access services (*CSLocationInformation*);
- Location information data relating to an access network providing packet-switched access services (*PSLocationInformation*); and
- Location information data relating to an access network providing evolved packet-switched access services, EPS, (*EPSLocationInformation*).

In turn, each of these sub-elements of location information, can comprise related detailed location information items, as illustrated in the Fig.3.

Considering the wide deployment of access networks all over the world, and the trend of people of carrying their communication devices when traveling (e.g. UEs such as mobile phones, PDAs with connection capabilities, personal computers, etc), it can be understood the large quantity of information to be held by an AS for adapting a service to a given UE based, among other, on its location information since (at least, theoretically) detailed location information about all the eventual access networks in which a UE could attach to should be stored (i.e. detailed location information sub items of: *CSLocationInformation, PSLocationInformation* and *EPSLocationInformation,* about all the eventual access networks an UE is theoretically allowed to connect), and details for service adaptation for each and every of the stored location details (e.g. for determining action [A], [B] or [C], as cited in the earlier example).

Also, it has to be taken into account that the -say-layered model for adapting services to UEs provided by the IMS features, which implies the intervention of an AS adapting the service by using UE related information provided by a HSS and/or by a S-CSCF, can turn into disadvantages. For example a company can have one or more ASs which connect to, and work in cooperation with, IMS nodes (e.g. S-CSCFs and HSSs) of more than one network operators of other companies. Furthermore, there can be roaming agreements between network operators that own different access networks in the same or different geographical regions; which can imply that some services can be allowed or denied to certain UEs according to e.g. the agreed roaming interconnection costs between the concerned operators and, in short, which can have an impact on how the services are adapted to certain UEs.

Therefore, apart of large quantity of information with regard to detailed location information mentioned earlier, configuring details of roaming agreements between operators might be undesirable in the multi-company scenario described above, e.g. as it implies disclosing business information to a third party.

The requirements cited above for the ASs with regard to configuring details of location information, and their specific corresponding service adaptation information for each and every of the configured location information details, require an ASs to incorporate a high-capacity data storage, which trend to increase their development cost, and brings about configuration complexity problems for them, since all of the ASs devoted to serve UEs of a certain operator(s) have to be reconfigured every time a detail with regard to changes in any access network to which said UE can theoretically attach (e.g. a new node is added, a new radio cell is added, etc).

However, an AS is preferably implemented as a -say- lightweight machine, which functional components (and inherent service logic) are preferably easily replaced or modified as long as some services are created or modified. Construction simplicity of AS apparatuses, and ease of replacements/modifications, allow deployment scenarios wherein a pull of ASs are put into service to serve, from any of the AS of the pull, to any of a plurality of UEs of one or more operators, for example, according to a round-robin distribution; thereby allowing that a failure in an AS does not affect the overall operation. Nevertheless, the conditions required by the prior-art, as cited above, require complex and expensive ASs.

It can be envisaged that telecommunications systems implementing similar kind of solutions as in IMS will suffer the same kind of disadvantages for controlling access to services based upon location information of a UE.

### SUMMARY

Aspects of the invention relate to methods and apparatuses as claimed in the independent claims. Embodiments of the invention are set out in the dependent claims.

The invention discloses methods and apparatuses for controlling access to services of a telecommunications system based upon location information of a user terminal, UE. A home subscriber server, HSS, receives location information identifying a node or an area of the access network to which a UE attaches, or identifying geographical information of said access network, and determines, based on said location information, a service roaming indicator value identifying a service level for adapting a service to said UE. The determined service roaming indicator value is sent to an application server, AS, which then adapts the provision of a service to the UE based on the value of the received service roaming indicator.

According to a first aspect, it is provided a method for use in a home subscriber server, HSS, for controlling access to services of a telecommunications system based upon location information of a user terminal, UE. The HSS determines, based on location information it has received for said UE identifying a node or an area of the access network to which a UE attaches, or identifying geographical information of said access network, a service roaming indicator value identifying a service level for adapting a service to said UE. The HSS then sends the determined service roaming indicator value to an application server, AS, thereby enabling the AS to adapt the provision of a service to the UE based on the value of said service roaming indicator.

According to one embodiment, for making the determination, the HSS is preferably configured with location information details that can be received for an UE, and the corresponding service roaming indicator value that correspond to each of the stored details and that will be sent to an AS for said UE in replacement, or in addition, to the detailed location information held by the HSS with regard to the UE. According to further embodiments, the HSS can send a service roaming indicator for an UE to an AS, either or both: upon a change in the location information held by the HSS with regard to the UE, or upon a request from the AS.

According to a second aspect, it is provided a method for use in an application server, AS, for controlling access to services of a telecommunications system based upon location information of a user terminal, UE. The AS receives a service roaming indicator value from a home subscriber server, HSS, in relationship with the UE, the service roaming indicator value being determined based on location information received by the HSS and identifying a service level for adapting a service to said UE. The AS then adapts the provision of a service to the UE based on the value of said service roaming indicator.

According to one embodiment, the step of adapting a service by the AS to an UE comprises allowing/denying a first service originated by the UE, or terminating in the UE, and/or executing a second service. According to a further embodiment, the AS obtains the service roaming indicator for an UE by sending to the HSS a request for obtaining data related to said UE, or a request subscribing to be notified from the HSS about a change on data related to said UE.

According to third and fourth aspects of the invention, it is provided a home subscriber server apparatus and an application server apparatus comprising means operable to execute, respectively, the methods above.

When dealing in an AS with the adaptation of a service to an UE, the features of the invention allows the AS to get rid of having to request and receive detailed location information to a home subscriber server for said UE, and have to process it, which can help to reduce signaling volume in their interfaces and save processing time for providing a service to an UE.

Also, by virtue of features of the invention, ASs are dispensed with the need of having to be configured with location information details about the plurality of access networks a UE can theoretically attach to and the corresponding service treatment consideration for each of said location details, as well as alleviated of having to receive updates concerning changes of said location information details; which results in ASs with less requirements with regard to storage and processing capacities and, thus, requiring less production costs.

### BRIEF DESCRIPTION OF THE DRAWINGS

Figure 1 illustrates schematically a telecommunications system comprising an IMS subsystem.
Figure 2 illustrates some details and interfaces of an IMS.
Figure 3 illustrates data that can be exchanged between a HSS and an AS through the "Sh" interface.
Figure 4 illustrates a method according to aspects of the invention.
Figure 5 illustrates schematically the content of a data storage in a home subscriber server according to an embodiment of the invention.
Figure 6 illustrates some signaling flows according to embodiments of the invention.
Figure 7 shows schematic block diagrams illustrating parts of a HSS apparatus and of an AS apparatus embodying the present invention.

### DETAILED DESCRIPTION

Some exemplary embodiments of the invention shall now be described with reference to the figures.

For the sake of illustration, a system as the one shown by Fig.1 comprising an IMS subsystem 130 shall be used to describe details of some embodiments. In the IMS, the home subscriber server HSS is assumed to integrate Home Location Register (HLR) functionality for access networks of different kinds providing CS/PS bearers accesses (e.g. legacy GSM access networks, UMTS access networks, and Long Term Evolution -LTE- access networks). Following this illustrating case, the application server of some examples shown hereinafter can be assumed to be a SIP-AS.

It is to be noticed that, although along the present application the term "UE" is used to refer to a user terminal/equipment connectable to an access network (120, 121, 122), some of the data referred herein as related to an UE need not to be belonging of the UE itself, but also to the user utilizing the UE and his/her related subscription data. This is the case wherein, for example, the UE identifies in an automatic manner (e.g. by means of an integrated card, such as a Subscriber Identity Module, SIM, or a similar embedded application), or in a manual manner (e.g. by means of credentials manually entered by the user operating the UE), thereby identifying also the user of the UE and, implicitly, a subscription said user might have with a network operator, and his/her related data. Accordingly, data which, for simplicity, are disclosed herein as relating to the UE, can encompass also UE's user (subscriber) related data too.

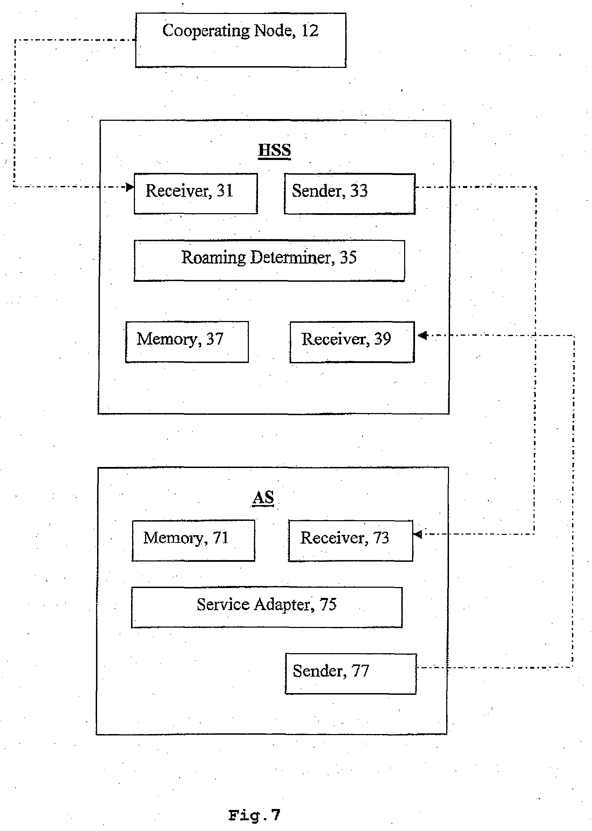

Fig.4 illustrates a method for controlling access to services of a telecommunications system. Steps of the method can be performed by a HSS apparatus and by an AS apparatus as illustrated in Fig.7, which, respectively, comprise means for performing the corresponding steps. The steps illustrated on the left side of Fig.4 are executed by the HSS, whilst the ones illustrated on the right side are executed by the AS.

In particular, Fig.7 illustrates a HSS apparatus comprising the next elements: receivers (31 and 39), a sender (33), a roaming detector (35) and a memory (37). With regard to the AS apparatus, Fig. 7 illustrates a memory (71), a receiver (73), a service adapter (75) and a sender (77). The constituent parts of these elements may be distributed in different components operable to bring about the intended function, as described hereinafter, and comprise devices, such as processors executing predefined instructions, circuitry arranged to perform certain logic (e.g. Field Programmable Gate Arrays, FPGAs, or Application Specific Integrated circuits, ASICs), and also storage means, comprising magnetic/optical discs or other well-known storage means. A plurality of distinct elements may also be gathered for providing the intended functionalities.

The process illustrated in Fig.4 starts with step 401, wherein the HSS receives location information identifying a node or an area of the access network to which a UE attaches, or identifying geographical information of said access network. This is also illustrated in the signaling flow of Fig.6 by flow 401. This can be accomplished by the receiver 31, which can be operable to receive e.g. Mobile Application Part, MAP, messages from a cooperating node 12, and to extract the location information included therein; for example, the location information.

A home subscriber server, HSS, such as the Home Subscriber Server disclosed by 3GPP TS 23.002, supports registrations of UEs, and stores subscription information for a plurality of UEs, and location information received from cooperating nodes in the access networks (e.g. MSC/VLRs, SGSNs, etc) with regard to said UEs.

As it is well known by those skilled in the art, the location information related to an UE is received (401) by a home subscriber server, HSS, from cooperating nodes in access networks intervening in the registration of the UE and its subsequent attachment, and/or intervening in roaming procedures for said UE (e.g. in access networks providing wireless mobility and, thus, wherein the point in the access network/s to which a registered UE attaches changes dynamically). Location information for a UE can be received by a home subscriber server from positioning servers (e.g. that can collect positioning information for UEs from access network nodes, and/or from the UEs), as well as from the UEs themselves (e.g. a GPS enabled UE can send positioning information to a node in a telecommunications network 100).

Examples of these cooperating nodes mentioned above are: MSC/VLRs for access networks providing CS access, SGSNs or Mobility Management Entity nodes (MME). The location information for an UE at a given moment can comprise one or more information elements providing location information details of the UE in one or more access networks (120, 121, 122). Examples of (detailed) location information are cited by the aforementioned 3GPP TS 29.328 in chapters 7.6.6.1, 7.6.6.2 and 7.6.6.3; which are also listed in Fig.3 under: "*CSLocationInformation*", "*PSLocationInformation*" (location related information for GPRS) or "*EPSLocationInformation*".

Step 401 can take place more than one time for a UE, wherein the location information held by the HSS for an UE at a given moment, and which is used for determining a "service roaming indicator" value (as will be later detailed), does not necessarily comprise values for all the information elements for all the access network types (e.g. CS, PS, EPS).

The receiver 31 in the HSS can be further operable to store the extracted location information and place it into a memory 37 of the HSS, as illustrated by box 402 in the signaling flow of Fig. 6.

Next, in step 403, the HSS determines, based on the received location information, a service roaming indicator value, which will be usable by a AS to adapt the provision of a service to the concerned UE in a simplified manner (i.e. without requiring the AS to receive and process detailed location information as held/received by the ASS), since the service roaming indicator establishes -say-discrete service levels for adapting a service to said UE. Step 403 can be accomplished by roaming determiner 35, which can be responsive to a notification from the receiver 31, or arranged to monitor data changes in the memory 37 regarding data related to an UE.

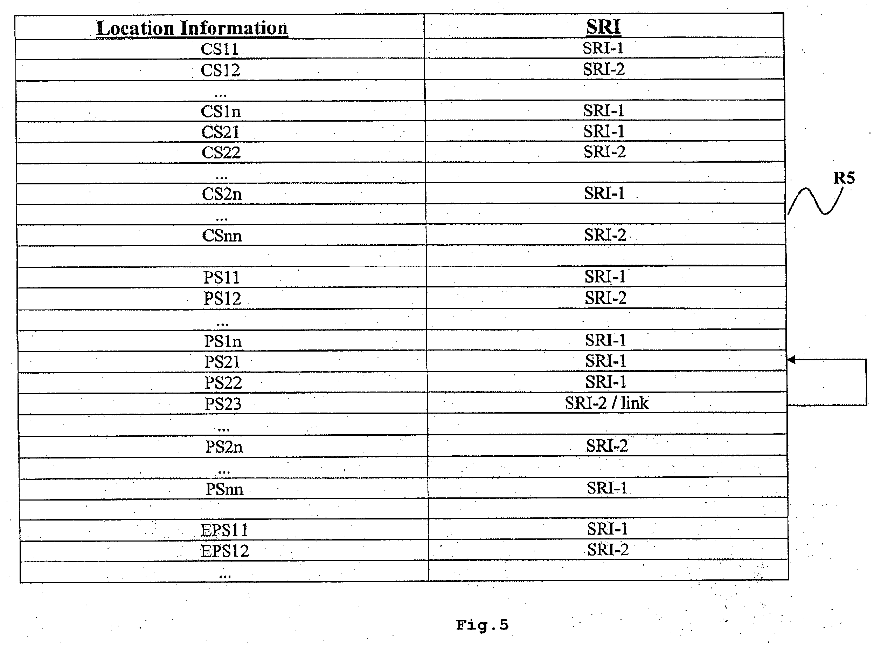

In order to perform step 403, the roaming determiner 35 can be arranged to check some pre-configured information that can be stored in e.g. memory 37, and which content is schematically illustrated by Fig.5. The illustrated embodiment shows a table of relationships (R5) between detailed location information that can be received by the HSS with regard to any of the UEs for which it serves as home subscriber server (values under the left column), and the corresponding (discrete) value that is to be associated to each of said eventual detailed locations (values under the right column), cited herein as service roaming indicator information, SRI, which is usable to identify a service level for adapting a service to a UE. As cited later, the number of said service levels is substantially lower than the number of location information elements which, as a part of location information related to an UE, can be received and held by a HSS.

Each of the information elements shown under the left column comprises information elements that can be received as location information by the HSS (step 401), and that identify e.g. a node or an area of the access network to which a UE can attach, or identifying geographical information of said access network. Preferably, the left column comprises values that can be received as location information from a plurality of access networks for UEs which related data are held by the HSS, and there is a row devoted for each of them. For example, values illustrated as "CS11" to "CS1n" and "PS11" to "PS1n" can contain "n" information elements relating to, respectively, CS and PS domains of a first access network ("1"). Similarly values illustrated as "CS21" to "CS2n" and "PS21" to "PS2n" can contain "n" information elements relating to, respectively,

CS and PS domains of a second access network ("2"). Accordingly, and taking as a basis the location information details disclosed by subchapters of chapter 7.6.6 in 3GPP 29.238, "CS12" can comprise a *MSC number* of access network "1", "PS22" can comprise a *SGSN number* of access network "2", and so on. Preferably, although not necessarily (since translation functions for representing and storing values can be available in the HSS), values shown on the left column of Fig. 5 correspond to the ones specified on chapters 7.6.6.1, 7.6.6.2 and 7.6.6.3 of 3GPP TS 29.328.

As will be appreciated, the SRI values on the right column of Fig. 5 are substantially less than the total location information values that can be configured in the left column, and this helps the HSS to easily determine, based on location information received for a UE on an step 401 (e.g. "PS22"), the SRI value that determines a service level that is to be applied by an AS for adapting a service to said UE (e.g. "SRI-1", as illustrated in the correspondence of Fig. 5). In the example, value "SRI-1" can indicate a first service level which is to be applied for services relating to UEs roaming in the network domain of the operator to which said UE is subscribed, and the value "SRI-2" can indicate a second service level which is to be applied for services relating to UEs roaming outside the network domain of the operator to which said UE is subscribed; wherein the second service level (SRI-2) implies, for example, restrictions to some services which are e.g. not barred by the first service level (SRI-1). Values for the service roaming indicator information, either: stored by a HSS as in the table R5 of Fig.5, or as transmitted to AS(S) can vary according to implementation details. For example, each SRI particular value can be represented by a numeric value, alphabetic value, etc, as long as they are distinct from each other.

Some more values can be included under the right column if a more detailed granularity in service provisioning level is desired, as long as they are substantially less than the values identifying detailed location information that can be received for UEs (Fig. 5, left column). For example, a third value (e.g. "SRI-3", not shown in Fig.5) can be also associated to one or more elements under the left column and establishing a third service level which is to be applied for services relating to UEs roaming outside the country network domain of the network operator to which the UE is subscribed, and which implies different service adaptations as for SRI-1 or SRI-2.

Also, and even if a very limited values for SRI are envisaged (e.g. two, as illustrated in Fig. 5) a detailed granularity in service provisioning level can be achieved. This is illustrated in Fig.5 by the arrow that links data stored in relationship with location information value "PS23" and the corresponding to location information value "PS21". For illustrating the example case, it can be assumed that "PS23" comprises the *SGSN number* of a certain SGSN of operator "2", and that "PS21" comprises the *global cell ID* of a radio cell of operator "2". The service roaming indicator value primarily stored in relationship with location information "PS23" can be e.g. "SRI-2" (as illustrated). However, alternatively, or additionally, the corresponding SRI (left) column corresponding to location information "PS23" can store a link to another location information element (e.g. "PS21", as illustrated). According to the example, if the location information received by the HSS for an UE comprises a value matching "PS23", then the determining step 403 can comprise the roaming determiner 35 selecting the corresponding related value "SRI-2". However, this can change if (additionally or alternatively) the corresponding SRI column comprises a link (as illustrated in Fig.5). In this later case, and as illustrated in the example, the roaming determiner 35 can select instead the value "SRI-1" if e.g. the location information of the UE also comprises the value "PS21".

Accordingly, a flexible selection of a service level for adapting a service to a UE can be achieved, which does not necessarily compels applying the same service level when the user is connected to a certain access network, but that different service levels can be applied to the UE within same access network (e.g. depending on details related to the attachment point). Also, features described hereinbefore and hereinafter allow enforcing service level agreements between operators holding access networks in different countries in an easy way, since ASs does not need to be configured with detailed relationships between a plurality of location information data details (as held by HSSs) and the corresponding service level for adapting services to the plurality of UEs they are intended to serve.

As commented earlier, memory 37 in the HSS stores a data relationship as shown in Fig 5, wherein each row is devoted to store information elements relating to nodes, area identifiers, etc, that can be received as location information in relationship with UEs. However, the table R5 of Fig. 5 does not need to store a row for all the eventual information elements that can be received as location information from cooperating nodes, which e.g. can relate to newly inserted nodes, or defined areas, that can not be updated on due time on the table. In order to allow a balance between the information stored by the HSS, and/or the frequency said information is (or can be) updated, the memory 37 can e.g. store a default SRI value (SRI-1, SRI-2 or SRI-3) associated to location information values which are not pre-defined in the table of Fig.5.

The method illustrated by Fig.4 continues with the step 405 of sending by the HSS the determined service roaming indicator value to an AS. In this step, the roaming determiner 35 instructs the sender to send a message towards the AS containing the SRI determined for an UE in step 403. Any eventual reply from the AS (or further request to the HSS, as will be later described) are primarily processed by receiver 39, which can imply the receiver 39 to extract some data of the received communication, request to store them in memory 37, and/or notify to the roaming determiner 35. In the HSS apparatus, the sender 33 and the receiver 39 can comprise communication means adapted to exchange messages according to e.g. DIAMETER protocol, as specified for "Sh" in 3GPP Specifications TS 29.328 and 29.329.

Flows 405-1, 405-2 and 405-3 in Fig.6 illustrate some embodiments for accomplishing with the step 405, as will be later detailed.

Step 405 can, for example, comprise the sending of DIAMETER message "User-Data-Answer", UDA (in case a previous DIAMETER message "User-Data-Request", UDR, was received from the AS), or the sending of a "Subscribe-Notifications-Answer", SNA, or of a "Push-Notification-Request", PNR (in case the AS has subscribed to changes in data related to a certain UE by means of sending a "Subscribe-Notifications-Request", SNR). All these messages already identify the concerned UE (e.g. by way of the so called "user identity" registered for the UE).

The method then proceeds with steps performed by the AS receiving from the HSS the service roaming indicator value for a certain UE, which start in step 407.

As shown in Fig.7, the AS comprises a receiver 73 operable to receive communications from a HSS, as in step 407. Following the aforementioned embodiment, the receiver 73 can be adapted to receive messages according to DIAMETER protocol, as specified for "Sh" in 3GPP Specifications TS 29.328 and 29.329. The receiver 73 is further operable to extract from the received message the contained service roaming indicator (SRI) and to transfer it to the service adapter 75. The receiver 73 can be further operable to store the received SRI in relationship with an identifier of the UE in the memory 71. In turn, the service adapter 75 is operable to adapt, as illustrated by step 409, the provision of a service to an UE based on the service indicator value indicated by the receiver 73, or as stored by the memory 71.

As a part of the service adaptation of a service (step 409), the service adapter 75 in the AS can be operable to allow or deny a service originated by the UE or terminating in the UE, based on the corresponding SRI received (or stored) in relationship with said UE. For example, if the corresponding SRI value is "SRI-2", all the incoming calls can be allowed, whilst all the outgoing calls can be barred. There can be also service adaptation nuances based on the corresponding SRI alone and also on certain preconfigured data, which can be related to a UE in particular, or to a plurality of UEs. For example, if the corresponding SRI value is "SRI-1", only incoming calls from certain UEs and/or outgoing calls to certain UEs (i.e. as identified by their corresponding user identifiers, or as a "wildcarded" range of identifiers) are to be allowed. Similarly, as a part of the service adaptation of a service, the service adapter 75 can be operable to, upon reception of a first service for an UE, such as an incoming call addressing to the concerned UE, start a second (e.g. complementary) service. This latest case can comprise, in case of a terminating service to the UE (e.g. an incoming call), requesting from the AS a communication between the calling party and another terminator (e.g. another UE, or a voice-mail recording server), and establishing said communication; which is usually known as call-forwarding. In case of an originating service (a call originated by the concerned UE, the second service can comprise setting up by the AS a (second) communication with another party (UE or server) which is not the one originally addressed by the concerned UE, and connect said UE with said another party. Similarly, in case of an originating service, the second service can comprise connecting temporarily the concerned (originating) UE to a server (which e.g. provides a recorded advertisement), and subsequently provide the originally requested (first) service by establishing a communication with the party (UE or server) originally indicated by the UE. Other examples for adapting a service to a UE can be apparent in view of the description (e.g.: notifying from the AS a certain charging rate and/or quality of service level to a further server).

Figure 6 illustrates some signaling flows according to embodiments of the invention.

As cited earlier, flow 401 (and the corresponding reception step 101) represents the reception of location information by the HSS from a cooperating node in an access network. Next to this, box 403 represents the execution of steps described earlier in relationship with step 403 of Fig. 3.

Flow 405-1 represents a novel feature of the invention, wherein the HSS, upon a change in location information related to an UE (e.g. a change in any of the sub-elements under *CSLocationInformation, PSLocationInformation* or *EPSLocationInformation*) sends a message to an AS which, according to the data of said UE held by the HSS, is assigned to provide services to said UE. This can be accomplished by the roaming determiner 35 being notified by the receiver 31, or scanning on memory 37, about a change in data location information data related to a UE, and prompting the sender 33 to send a message to the AS comprising the corresponding determined service roaming indicator, SRI. In particular, in this case, the sender 33 is prompted to send the message 405-1 without the HSS having received any earlier request in this respect from the AS (e.g. an explicit subscription to data modification, SNR, or an explicit request for UE related data, UDR). The notification sent in message 405-1 can be accomplished by using DIAMETER protocol, or any other suitable communications protocol, as long as they convey the SRI and explicitly or implicitly an identifier of the concerned UE (an identifier of the concerned UE can implicitly be identified by e.g. a session identifier conveyed in the message 405-1, which exclusively relate to the concerned UE)

Next, the receiver 73 of the AS can optionally store the received SRI within the memory 71 in relationship with an identifier the UE, as illustrated by box 408. This information can advantageously be used by the service adapter 75 of the AS to adapt, in that moment, or later, a service to said UE, as illustrated by box 409 which corresponds to the step 409 disclosed earlier.

Flow 610-1 and the subsequent illustrated flow 405-2 represent an embodiment of the invention wherein the AS sends a message to the HSS to subscribe to be notified about changes on certain UE data (as identified in the message of flow 610-1). In this embodiment, the AS is notified accordingly from the HSS by message 405-2 that comprises, among other eventual information, the service roaming indicator that correspond to said UE, upon a change on the location data of said UE.

Flow 610-1 can comprise a sender 77 in the AS sending a DIAMETER message "Subscribe-Notifications-Request", SNR, that is received by receiver 39 in the HSS. The SNR DIAMETER message is thus preferably modified to allow the AS to indicate "Location Information" as the UE data to which it subscribes, or to indicate "Service Roaming Information", SRI, as a new value for the data to which it subscribes. The subsequent processing in the HSS can comprise the roaming determiner 35 executing the step 403, and prompting the sender 33 to send an immediate reply (flow 405-2), such as a DIAMETER message "Subscribe-Notifications-Answer", SNA, containing the SRI that (e.g. according to the table of Fig. 5) is determined by the HSS that correspond to the current location information for the concerned UE.

The reception of updates/changes on location information by the HSS with regard to one or more UEs, as we as the subsequent determination with regard to the corresponding service routing information is illustrated in Fig. 6 by box "401..403". Accordingly, flow 405-2 can also comprise a sending of a (further/subsequent) reply to an earlier SNR request from the AS, which takes place e.g. once the HSS has received (401) a change on location information data related to the concerned UE, and has determined (403) the corresponding SRI value due to said change. In this case, flow 405-2 can comprise the sending by the sender 33 of the HSS towards the AS of a DIAMETER message "Push-Notification-Request", PNR, containing -among other information- the determined service roaming indicator for the concerned UE. The message received in flow 405-2 is then received by the receiver 73 of the AS, and processed therein as described earlier with regard to steps 408 and 409.

It is to be noticed that the sender 77 and the receiver 73 in the AS can comprise communication means adapted to exchange messages with a HSS according to e.g. DIAMETER protocol, as specified for "Sh" in 3GPP Specifications TS 29.328 and 29.329.

Subsequent signaling flows illustrated by Fig. 6 show a further embodiment wherein the AS, for controlling access to a service requested by a UE, and to further adapt it according to location information of said UE, requests on the fly information to the HSS.

In the illustrated example, flow 701 represents the reception of a SIP "INVITE" message relating to a certain UE. Namely, the INVITE message can refer to a given UE (or, as cited earlier, to a user of said UE) either: as a terminating party (i.e. destination of the call session), or as an originating party (i.e. origination of the call session); wherein this kind of information is apparent from the syntax of the INVITE message.

If the AS has not received earlier (405-1, 405-2), and stored (408), a service roaming indicator, SRI, for said UE, or if the AS has not subscribed before the HSS to receive notifications on change of data related to said UE (610-1) and received the subsequent updates (405-2), and in any case the AS wants to obtain fresh service roaming indicator of a UE, the sender 77 of the AS can be instructed to send a explicit request to obtain data related to an UE. In the illustrated case, the AS sends a DIAMETER message "User-Data-Request", UDR, (flow 610-2) for obtaining SRI (and, optionally, other data) related to an UE identified in the received SIP INVITE message (701), so as to determine, based on said SRI, how to adapt the service for said UE.

The HSS sends a response (e.g. a DIAMETER message "User-Data-Answer", UDA) in flow 405-3, by processing the request of the AS in a similar manner as described earlier with reference to reception of flow 610-1, but based on the current location information held by the HSS in that moment. For example, the reception of the message of flow 601-2 by the receiver 39 of the HSS, prompts the roaming determiner 35 to search in the memory 37 the current location information value(s) stored in relationship with said UE, and to check the corresponding SRI (e.g. as established by the mapping configured in the table of Fig.5). Subsequently, the roaming determiner 35 prompts the sender 33 to send the response message (405-3).

At reception of the response from the HSS (405-3), the AS adapts the received service for the UE based on the service roaming indicator value received. In the illustrated example, the service adapter 75 decides how the SIP INVITE (initiated by, or terminating in, the UE) is to be further processed, and executes the adaptation step 409 as described earlier. Additionally, the AS can perform the step (408) of storing in the memory 71 the received service roaming indicator value, thereby allowing it to adapt a subsequent service for the same UE (e.g. received after a certain time) without further querying to the HSS and, thereby, reducing signaling between them. For the case illustrated in the figure, the adaptation step 409 can comprise, e.g.: forwarding the SIP INVITE message towards the originally indicated destination, forwarding it to an alternative destination, sending back a negative reply to the received SIP INVITE (thereby, denying the requested communication), change some of its original contents and further route it, build up a new SIP INVITE thereby invoking a new service, etc.

According to one embodiment, the service roaming indicator, SRI, can be envisaged to belong to the data which, related to a user/UE, are, both: held by the HSS in relationship with a user/UE (e.g. as illustrated in Fig.3), and exchanged with an AS. Furthermore, the service roaming indicator, SRI, might replace location information currently sent by the HSS to AS across the "Sh" interface (i.e. "*CSLocationInformation*", "*PSLocationInformation*"*,* and "*EPSLocationInformation*"*,* as illustrated in Fig.3). This will alleviate the AS of having to receive (also) detailed location information as cited above, which should then be replaced by a (simplified) service roaming indicator, and thus reduce data volume in the signaling through the "Sh" interface. However, in order to minimize the impact in servers (HSS, AS) compliant with current 3GPP specifications, the service roaming indicator can be indicated in requests and responses exchanged between HSSs and ASs as an additional new information element. In the case of "Sh" interfaces and DIAMETER protocol, it can comprise new Attribute-Value-PeerS, AVPs, which can be ignored by the receiver if the feature is not supported.

For example, in order to convey information about service roaming indicators, SRI, in the signaling between a HSS and a AS through "Sh" interfaces of a IMS, new information elements can be added to, either or both: allow an AS to request explicitly SRI related to a given UE (or related to a plurality of UEs), and allow the HSS to send the SRI value that correspond to an UE. For accomplishing with this, a new DIAMETER Attribute-Value-Peer, AVP, named e.g. *"Service Roaming Information"* could be used in the aforementioned related DIAMETER messages (e.g. SNR, SNA, PNR, UDR and UDA), wherein its presence in a request (e.g. SNR, UDR) would imply a reply (e.g. SNA, PNR, UDA) comprising at least the corresponding service roaming indicator(s). In a preferred embodiment, as described above, an AS can explicitly request only service roaming indicator of an UE, or subscribe only to receive service roaming indicator for an UE when its related location information makes it to change. The values of a service roaming indicator, in case of DIAMETER protocol, can be of type "*Enumerated*" and comprise discrete values such as: "0", "1" and "2"; indicating with regard to service adaptation for an AS that the UE is to be served according to the indicated value, which can, respectively indicate that, e.g. the UE is roaming in the network domain of its home operator ("0"), or e.g. that the UE is roaming outside the network domain of its home operator ("1"), or e.g. that the UE is roaming outside the country of its home operator ("3").

It will be appreciated by the person of skill in the art that various modifications may be apparent in view of the exemplary embodiments described above with reference to a IMS subsystem.

In particular, it will be appreciated that the term "home subscriber server" used in the illustrating embodiments does not necessarily compels a HSS as described/specified for complying with IMS, but that such a server can be any other kind of home subscriber server arranged for receiving and storing location information about a plurality of UEs. Similarly, the term "application server" used also in the illustrating embodiments does not necessarily compels an application server compliant with the IMS architecture (e.g. as in Fig.2), and thus arranged to cooperate with a HSS through a "Sh" interface, but that such an application server can be any server arranged to control the adaptation of a service to a UE.

## Claims

1. A method for use in a home subscriber server, HSS, for controlling access to services of a telecommunications system based upon location information of a user terminal, UE, comprising:
- receiving (401) by the HSS location information identifying a node or an area of the access network to which a UE attaches, or identifying geographical information of said access network;
**CHARACTERIZED in that** it further comprises the steps of:
- determining (403) by the HSS, based on said location information, a service roaming indicator value (SRI-1, SRI-2) identifying a service level for adapting a service to said UE, and
- sending (405) by the HSS the determined service roaming indicator value to an Application Server, AS, thereby enabling the AS to adapt the provision of a service to the UE based on the value of said service roaming indicator.

2. The method of claim, 1 further comprising the step of:
- storing (R5) by the HSS a service roaming indicator value in relationship to location information that can be received for an UE;
wherein the step of determining comprises the step of:
- determining by the HSS, based on location information received for an UE and said stored relationship, the corresponding related service roaming indicator value to be sent to the AS for said UE.

3. The method of claim 1 wherein the step of sending by the HSS the service roaming indicator to an AS takes place as a result of a change on location information relating to an UE received by the HSS.

4. The method of claim 1 further comprising the step of receiving (610-1, 610-2) by the HSS a request from a AS for obtaining data related to said UE, or for subscribing to be notified about a change on data related to said UE, and wherein the step of sending by the HSS the service roaming indicator to an AS takes place if said request from the AS has been received.

5. A method for use in an application server, AS, for controlling access to services of a telecommunications system based upon location information of a user terminal, UE, comprising:
- receiving (407) by the AS a service roaming indicator value (SRI-1, SRI-2) from a Home Subscriber Server, HSS, in relationship with the UE, the service roaming indicator value being determined based on location information received by the HSS and identifying a service level for adapting a service to said UE, and
- adapting (409) by the AS the provision of a service to the UE based on the value of said service roaming indicator.

6. The method of claim 5 wherein the step of adapting by the AS the provision of a service to the UE comprises at least one step selected from:
- allowing a service originated by the UE or terminating in the UE,
- denying a service originated by the UE or terminating in the UE, or
- executing a second service for the UE upon reception of a first service originated by the UE or terminating in the UE;
depending on the value of the service roaming indicator received for said UE.

7. The method of claim 5 wherein the step of receiving from a HSS the service roaming indicator related to a UE takes place upon the step of sending by the AS (610-1, 610-2) to the HSS a request for obtaining data related to said UE, or a request subscribing to be notified about a change on data related to said UE.

8. A Home Subscriber Server apparatus, HSS, comprising:
- a receiver (31) operable to receive location information identifying a node or an area of the access network to which a UE attaches, or identifying geographical information of said access network; **CHARACTERIZED in that** it further comprises:
- a roaming determiner (35) operable to determine, based on received location information, a service roaming indicator value (SRI-1, SRI-2) identifying a service level for adapting a service to said UE, and
- a sender (33) operable to send a service roaming indicator value to an Application Server, AS, thereby enabling the AS to adapt the provision of a service to the UE based on the value of said service roaming indicator.

9. The HSS of claim 8 further comprising:
- a data storage (37) for storing (R5) a service roaming indicator value in relationship to location information that can be received for an UE;
wherein the roaming determiner is further operable to determine, based on location information received for an UE and said stored relationship, the corresponding related service roaming indicator value to be sent to the AS for said UE.

10. The HSS of claim 8 wherein the sender is further operable to send a service roaming indicator value to an AS a result of a change on location information relating to an UE received by the HSS.

11. The HSS of claim 8 further comprising a receiver (39) operable to receive a request from a AS for obtaining data related to said UE, or for subscribing to be notified about a change on data related to said UE, and wherein the sender is further operable to send a service roaming indicator to an AS if said request from the AS has been received.

12. An Application Server apparatus, AS, comprising:
- a receiver (73) operable to receive a service roaming indicator value (SRI-1, SRI-2) from a Home Subscriber Server, HSS, in relationship with a UE, the service roaming indicator value being determined based on location information received by the HSS and identifying a service level for adapting a service to said UE, and
- a service adapter (75) operable to adapt the provision of a service to the UE based on the value of said service roaming indicator.

13. The AS of claim 12 wherein the service adapter is further operable to:
- allow a service originated by the UE or terminating in the UE,
- deny a service originated by the UE or terminating in the UE,
- execute a second service for the UE upon reception of a first service originated by the UE or terminating in the UE;
depending on the value of the service roaming indicator received for said UE.

14. The AS of claim 12 further comprising:
- a sender (77) operable to send to the HSS a request for obtaining data related to a UE, or a request subscribing to be notified about a change on data related to a UE,
- wherein the receiver is further operable to receive a service roaming indicator value in relationship with said UE as a result of said request.

15. The method or apparatus of any preceding claim wherein the UE is subscribed to a network operator of the system, and wherein a service roaming indicator comprises a value selected from:
- a first value indicating that the UE is considered to be roaming in the network domain of the operator,
or
- a second value indicating that the UE is considered to be roaming outside the network domain of the operator, or
- a third value indicating that the UE is considered to be roaming outside the country network domain of the operator.

16. The method or apparatus of any preceding claim wherein the telecommunications system comprises an IP Multimedia Subsystem, IMS, wherein the AS is a Session Initiation Protocol, SIP, application server, SIP-AS, and wherein the communications between the HSS and the AS are accomplished through a "Sh" interface.

## Patentansprüche

1. Verfahren zur Verwendung in einem Heimteilnehmerserver, HSS, zum Steuern des Zugangs zu Diensten eines Telekommunikationssystems auf Grundlage von Standortinformationen eines Nutzerendgeräts, UE, Folgendes umfassend:
- Empfangen (401), und zwar durch den HSS, von Standortinformationen, die einen Knoten oder einen Bereich des Zugangsnetzes angeben, mit dem sich ein UE verbindet, oder die geografischen Informationen des Zugangsnetzes angeben;
**dadurch gekennzeichnet, dass** es darüber hinaus die folgenden Schritte umfasst:
- Bestimmen (403), und zwar durch den HSS, auf Grundlage der Standortinformationen, eines Dienst-Roaming-Indikatorwerts (SRI-1, SRI-2), der eine Dienststufe zum Anpassen eines Diensts an das UE angibt, und
- Senden (405), und zwar durch den HSS, des bestimmten Dienst-Roaming-Indikatorwerts an einen Anwendungsserver, AS, wodurch der AS in die Lage versetzt wird, das Bereitstellen eines Dienstes an das UE auf Grundlage der Werts des Dienst-Roaming-Indikators anzupassen.

2. Verfahren nach Anspruch 1, darüber hinaus den folgenden Schritt umfassend:
- Speichern (R5), und zwar durch den HSS, eines Dienst-Roaming-Indikatorwerts in Beziehung zu den Standortinformationen, die für ein UE empfangen werden können;
wobei der Schritt des Bestimmens den folgenden Schritt umfasst:
- Bestimmen, und zwar durch den HSS, auf Grundlage der für ein UE empfangenen Standortinformationen und der gespeicherten Beziehung, des entsprechenden zugehörigen Dienst-Roaming-Indikatorwerts, der für das UE an den AS geschickt werden soll.

3. Verfahren nach Anspruch 1, wobei der Schritt des Sendens, durch den HSS, des Dienst-Roaming-Indikatorwerts an einen AS als Ergebnis einer durch den HSS empfangenen Änderung an den Standortinformationen stattfindet, die sich auf ein UE beziehen.

4. Verfahren nach Anspruch 1, darüber hinaus den folgenden Schritt umfassend:
Empfangen (610-1, 610-2), und zwar durch den HSS, einer Anfrage von einem AS, um auf das UE bezogene Daten zu erhalten, oder um sich anzumelden, über eine Änderung an auf das UE bezogenen Daten informiert zu werden, und wobei der Schritt des Sendens des Dienst-Roaming-Indikators durch den HSS an einen AS stattfindet, wenn der Anfrage aus dem AS empfangen wurde.

5. Verfahren zur Verwendung in einem Anwendungsserver, AS, zum Steuern des Zugangs zu Diensten eines Telekommunikationssystems auf Grundlage von Standortinformationen eines Nutzerendgeräts, UE, Folgendes umfassend:
- Empfangen (407), und zwar durch den AS, eines Dienst-Roaming-Indikatorwerts (SRI-1, SRI-2) von einem Heimteilnehmerserver, HSS, in Beziehung mit dem UE, wobei der Dienst-Roaming-Indikatorwert auf Grundlage von durch den HSS empfangenen Standortinformationen bestimmt wird und eine Dienstebene zum Anpassen eines Dienstes an das UE angibt, und
- Anpassen (409), und zwar durch den AS, des Bereitstellens eines Dienstes an das UE auf Grundlage des Werts des Dienst-Roaming-Indikators.

6. Verfahren nach Anspruch 5, wobei der Schritt des Anpassens, durch den AS, der Bereitstellung eines Dienstes an das UE mindestens einen Schritt umfasst, der ausgewählt ist aus:
- Zulassen eines Dienstes, der ursprünglich vom UE entstammt oder im UE endet,
- Verweigern eines Dienstes, der ursprünglich vom UE entstammt oder im UE endet,
- Ausführen eines zweiten Dienstes für das UE beim Empfang eines ersten Dienstes, der ursprünglich vom UE entstammt oder im UE endet;
in Abhängigkeit von dem für das UE empfangenen Wert des Dienst-Roaming-Indikators.

7. Verfahren nach Anspruch 5, wobei der Schritt des Empfangens, von einem HSS, eines auf ein UE bezogenen Dienst-Roaming-Indikators beim Schritt des Sendens, durch den AS (610-1, 610-2) an den HSS, einer Anfrage, um auf mit dem UE in Beziehung stehende Daten zu erhalten, oder einer Anfrage stattfindet, um sich anzumelden, über eine Änderung an mit dem UE in Beziehung stehende Daten informiert zu werden.

8. Heimteilnehmerdienstvorrichtung, HSS; Folgendes umfassend:
- einen Empfänger (31), der funktionsfähig ist, Standortinformationen zu empfangen, die einen Knoten oder einen Bereich des Zugangsnetzes angeben, mit dem sich ein UE verbindet, oder die geografische Informationen des Zugangsnetzes angeben;
**dadurch gekennzeichnet, dass** sie darüber hinaus umfasst:
- einen Roaming-Bestimmer (35), der funktionsfähig ist, auf Grundlage von empfangenen Standortinformationen, einen Dienst-Roaming-Indikatorwert (SRI-1, SRI-2) zu bestimmen, der eine Dienstebene zum Anpassen eines Dienstes an das UE angibt, und
- einen Sender (33), der funktionsfähig ist, einen Dienst-Roaming-Indikatorwert an einen Anwendungsserver, AS, zu senden, wodurch der AS in die Lage versetzt wird, das Bereitstellen eines Dienstes an das UE auf Grundlage der Werts des Dienst-Roaming-Indikators anzupassen.

9. HSS nach Anspruch 8, darüber hinaus umfassend:
- einen Datenspeicher (37) zum Speichern (R5) eines Dienst-Roaming-Indikatorwerts in Beziehung zu Standortinformationen, die für ein UE empfangen werden können;
wobei der Roaming-Bestimmer darüber hinaus funktionsfähig ist, auf Grundlage der für ein UE empfangenen Standortinformationen und des gespeicherter Beziehung, den entsprechenden zugehörigen Dienst-Roaming-Indikatorwert zu bestimmen, der für das UE an den AS gesendet werden soll.

10. HSS nach Anspruch 8, wobei der Sender darüber hinaus funktionsfähig ist, einen Dienst-Roaming-Indikatorwert an einen AS als Ergebnis einer durch den HSS empfangenen Änderung an den Standortinformationen zu senden, die sich auf ein UE beziehen.

11. HSS nach Anspruch 8, darüber hinaus einen Empfänger (39) umfassend, der funktionsfähig ist, einer Anfrage von einem AS zu empfangen, um auf das UE bezogene Daten zu erhalten, oder um sich anzumelden, über eine Änderung an auf das UE bezogenen Daten informiert zu werden, und wobei der Sender darüber hinaus funktionsfähig ist, einen Dienst-Roaming-Indikators an einen AS zu senden, wenn die Anfrage aus dem AS empfangen wurde.

12. Anwendungsservervorrichtung, AS, Folgendes umfassend:
- einen Empfänger (73), der funktionsfähig ist, einen Dienst-Roaming-Indikatorwert (SRI-1, SRI-2) von einem Heimteilnehmerserver, HSS, in Beziehung mit einem UE, zu empfangen, wobei der Dienst-Roaming-Indikatorwert auf Grundlage von durch den HSS empfangenen Standortinformationen bestimmt ist und eine Dienstebene zum Anpassen eines Dienstes an das UE angibt, und
- einen Dienstanpasser (75), der funktionsfähig ist, das Bereitstellen eines Dienstes an das UE auf Grundlage des Werts des Dienst-Roaming-Indikators anzupassen.

13. AS nach Anspruch 12, wobei der Dienstanpasser darüber hinaus funktionsfähig ist zum:
- Zulassen eines Dienstes, der ursprünglich vom UE entstammt oder im UE endet,
- Verweigern eines Dienstes, der ursprünglich vom UE entstammt oder im UE endet,
- Ausführen eines zweiten Dienstes für das UE beim Empfang eines ersten Dienstes, der ursprünglich vom UE entstammt oder im UE endet;
in Abhängigkeit von dem für das UE empfangen Wert des Dienst-Roaming-Indikators.

14. AS nach Anspruch 12, darüber hinaus umfassend:
- einen Sender (77), der funktionsfähig ist, an den HSS einer Anfrage, um auf das UE bezogene Daten zu erhalten, oder einen Abruf zu senden, um sich anzumelden, über eine Änderung an auf das UE bezogenen Daten informiert zu werden,
- wobei der Empfänger darüber hinaus funktionsfähig ist, einen Dienst-Roaming-Indikatorwert in Beziehung mit dem UE als Ergebnis der Anfrage zu empfangen.

15. Verfahren oder Vorrichtung nach einem der vorhergehenden Ansprüche, wobei das UE bei einem Netzbetreiber des Systems angemeldet ist, und wobei der Dienst-Roaming-Indikator einen Wert umfasst, der ausgewählt ist aus:
- einem ersten Wert, der angibt, dass das UE als sich in der Netzwerkdomäne des Betreibers bewegend erachtet wird, oder
- einem zweiten Wert, der angibt, dass das UE als sich außerhalb der Netzwerkdomäne des Betreibers bewegend erachtet wird, oder
- einem dritten Wert, der angibt, dass das UE als sich außerhalb der Landesnetzwerkdomäne des Betreibers bewegend erachtet wird.

16. Verfahren oder Vorrichtung nach einem beliebigen vorhergehenden Anspruch, wobei das Telekommunikationssystem ein IP Multimedia Subsystem, IMS, umfasst, wobei der AS ein Session Initiated Protocol, SIP, Anwendungsserver, SIP-AS, ist, und wobei die Kommunikationen zwischen dem HSS und dem AS über eine "Sh"-Schnittstelle erfolgen.

## Revendications

1. Procédé destiné à être utilisé dans un serveur d'abonné résidentiel, HSS, pour contrôler l'accès à des services d'un système de télécommunication sur la base d'informations de localisation d'un terminal d'utilisateur, UE, comprenant :
- la réception (401) par le HSS d'informations de localisation identifiant un noeud ou une zone du réseau d'accès auquel un UE se rattache, ou identifiant des informations géographiques dudit réseau d'accès ;
**caractérisé en ce qu'**il comprend en outre les étapes consistant à :
- déterminer (403) par le HSS, sur la base desdites informations de localisation, une valeur d'indicateur d'itinérance de service (SRI-1, SRI-2) identifiant un niveau de service pour adapter un service audit UE, et
- envoyer (405) par le HSS la valeur d'indicateur d'itinérance de service déterminée à un Serveur d'application, AS, permettant ainsi à l'AS d'adapter la fourniture d'un service à l'UE sur la base de la valeur dudit indicateur d'itinérance de service.

2. Procédé selon la revendication 1, comprenant en outre l'étape consistant à :
- stocker (R5) par le HSS une valeur d'indicateur d'itinérance de service en relation avec des informations de localisation qui peuvent être reçues pour un UE ;
dans lequel l'étape de détermination comprend l'étape consistant à :
- déterminer par le HSS, sur la base d'informations de localisation reçues pour un UE et de ladite relation stockée, la valeur d'indicateur d'itinérance de service connexe correspondante à envoyer à l'AS pour ledit UE.

3. Procédé selon la revendication 1, dans lequel l'étape d'envoi par le HSS de l'indicateur d'itinérance de service à un AS a lieu à la suite d'un changement sur des informations de localisation relatives à un UE reçues par le HSS.

4. Procédé selon la revendication 1, comprenant en outre l'étape consistant à recevoir (610-1, 610-2) par le HSS une demande en provenance d'un AS pour obtenir des données liées audit UE, ou pour s'abonner pour être notifié d'un changement sur des données liées audit UE, et dans lequel l'étape consistant à envoyer par le HSS l'indicateur d'itinérance de service à un AS a lieu si ladite demande en provenance de l'AS a été reçue.

5. Procédé destiné à être utilisé dans un serveur d'application, AS, pour contrôler l'accès à des services d'un système de télécommunications sur la base d'informations de localisation d'un terminal d'utilisateur, UE, comprenant :
- la réception (407) par l'AS d'une valeur d'indicateur d'itinérance de service (SRI-1, SRI-2) en provenance d'un Serveur d'abonné résidentiel, HSS, en relation avec l'UE, la valeur d'indicateur d'itinérance de service étant déterminée sur la base d'informations de localisation reçues par le HSS et identifiant un niveau de service pour adapter un service audit UE, et
- l'adaptation (409) par l'AS de la fourniture d'un service à l'UE sur la base de la valeur dudit indicateur d'itinérance de service.

6. Procédé selon la revendication 5, dans lequel l'étape d'adaptation par l'AS de la fourniture d'un service à l'UE comprend au moins une étape sélectionnée parmi :
- l'autorisation d'un service ayant pour origine l'UE ou se terminant dans l'UE,
- le refus d'un service ayant pour origine l'UE ou se terminant dans l'UE, ou
- l'exécution d'un second service pour l'UE lors de la réception d'un premier service ayant pour origine l'UE ou se terminant dans l'UE ;
en fonction de la valeur de l'indicateur d'itinérance de service reçu pour ledit UE.

7. Procédé selon la revendication 5, dans lequel l'étape de réception en provenance d'un HSS de l'indicateur d'itinérance de service lié à un UE a lieu lors de l'étape d'envoi par l'AS (610-1, 610-2) au HSS d'une demande pour obtenir des données liées audit UE, ou d'une demande d'abonnement pour être notifié d'un changement sur des données liées audit UE.

8. Appareil de Serveur d'abonné résidentiel, HSS, comprenant :
- un récepteur (31) exploitable pour recevoir des informations de localisation identifiant un noeud ou une zone du réseau d'accès auquel un UE se rattache, ou identifiant des informations géographiques dudit réseau d'accès ;
**caractérisé en ce qu'**il comprend en outre :
- un déterminateur d'itinérance (35) exploitable pour déterminer, sur la base d'informations de localisation reçues, une valeur d'indicateur d'itinérance de service (SRI-1, SRI-2) identifiant un niveau de service pour adapter un service audit UE, et
- un envoyeur (33) exploitable pour envoyer une valeur d'indicateur d'itinérance de service à un Serveur d'application, AS, permettant ainsi à l'AS d'adapter la fourniture d'un service à l'UE sur la base de la valeur dudit indicateur d'itinérance de service.

9. HSS selon la revendication 8, comprenant en outre :
- un stockage de données (37) pour stocker (R5) une valeur d'indicateur d'itinérance de service en relation avec des informations de localisation qui peuvent être reçues pour un UE ;
dans lequel le déterminateur d'itinérance est en outre exploitable pour déterminer, sur la base d'informations de localisation reçues pour un UE et de ladite relation stockée, la valeur d'indicateur d'itinérance de service connexe correspondante à envoyer à l'AS pour ledit UE.

10. HSS selon la revendication 8, dans lequel l'envoyeur est en outre exploitable pour envoyer une valeur d'indicateur d'itinérance de service à un AS à la suite d'un changement sur des informations de localisation relatives à un UE reçues par le HSS.

11. HSS selon la revendication 8, comprenant en outre un récepteur (39) exploitable pour recevoir une demande en provenance d'un AS pour obtenir des données liées audit UE, ou pour s'abonner pour être notifié d'un changement sur des données liées audit UE, et dans lequel l'envoyeur est en outre exploitable pour envoyer un indicateur d'itinérance de service à un AS si ladite demande en provenance de l'AS a été reçue.

12. Appareil de Serveur d'application, AS, comprenant :
- un récepteur (73) exploitable pour recevoir une valeur d'indicateur d'itinérance de service (SRI-1, SRI-2) en provenance d'un Serveur d'abonné résidentiel, HSS, en relation avec un UE, la valeur d'indicateur d'itinérance de service étant déterminée sur la base d'informations de localisation reçues par le HSS et identifiant un niveau de service pour adapter un service audit UE, et
- un adaptateur de service (75) exploitable pour adapter la fourniture d'un service à l'UE sur la base de la valeur dudit indicateur d'itinérance de service.

13. AS selon la revendication 12, dans lequel l'adaptateur de service est en outre exploitable pour :
- autoriser un service ayant pour origine l'UE ou se terminant dans l'UE,
- refuser un service ayant pour origine l'UE ou se terminant dans l'UE, ou
- exécuter un second service pour l'UE lors de la réception d'un premier service ayant pour origine l'UE ou se terminant dans l'UE ;
en fonction de la valeur de l'indicateur d'itinérance de service reçu pour ledit UE.

14. AS selon la revendication 12, comprenant en outre :
- un envoyeur (77) exploitable pour envoyer au HSS une demande pour obtenir des données liées à un UE, ou une demande d'abonnement pour être notifié d'un changement sur des données liées à un UE,
- dans lequel le récepteur est en outre exploitable pour recevoir une valeur d'indicateur d'itinérance de service en relation avec ledit UE à la suite de ladite demande.

15. Procédé ou appareil selon l'une quelconque des revendications précédentes, dans lequel l'UE est abonné à un opérateur de réseau du système, et dans lequel un indicateur d'itinérance de service comprend une valeur sélectionnée parmi :
- une première valeur indiquant que l'UE est considéré comme étant en itinérance dans le domaine de réseau de l'opérateur, ou
- une deuxième valeur indiquant que l'UE est considéré comme étant en itinérance à l'extérieur du domaine de réseau de l'opérateur, ou
- une troisième valeur indiquant que l'UE est considéré comme étant en itinérance à l'extérieur du domaine de réseau de pays de l'opérateur.

16. Procédé ou appareil selon l'une quelconque des revendications précédentes, dans lequel le système de télécommunications comprend un Sous-système multimédia IP, IMS, dans lequel l'AS est un Serveur d'application de Protocole d'initiation de session, SIP-AS, et dans lequel les communications entre le HSS et l'AS sont accomplies par l'intermédiaire d'une interface « Sh ».
